# EUROPEAN PATENT APPLICATION

(11) **EP 4 832 182 A2**
(43) Date of publication of application: **28.10.2026**
(21) Application number: 26184388.2
(22) Date of filing: 20.10.2021
(51) Int. Cl.: H01M 50/184

(54) **END COVER ASSEMBLY, BATTERY CELL, BATTERY, AND ELECTRIC DEVICE**

(62) Document number(s) of the earlier application(s) in accordance with Art. 76 EPC: 21960941.9 / 4 372 874
(71) Applicant: Contemporary Amperex Technology (Hong Kong) Limited, Hong Kong (HK)
(72) Inventor: CHEN, Wenwei, Ningde, 352100 (CN); CHEN, Xinxiang, Ningde, 352100 (CN); ZHENG, Yulian, Ningde, 352100 (CN); BU, Xiangyan, Ningde, 352100 (CN); LI, Quankun, Ningde, 352100 (CN); WANG, Peng, Ningde, 352100 (CN); JIN, Haizu, Ningde, 352100 (CN)
(74) Representative: Gong, Jinping

(57) **Abstract**

Embodiments of this application provide an end cover assembly, a battery cell, a battery, and an electric device, pertaining to the field of battery technologies. The end cover assembly includes an end cover and an electrode terminal. The end cover has an abutting surface. A terminal assembly includes the electrode terminal and a connecting member, where the connecting member is configured to connect the electrode terminal and the end cover so as to fix the electrode terminal to the end cover, and the connecting member abuts against the abutting surface. The abutting surface is provided with a concave portion recessed in a thickness direction of the end cover, and the concave portion is configured to accommodate a part of the electrode terminal. The concave portion can accommodate a part of the electrode terminal, so that this part of the electrode terminal sinks into the concave portion, reducing space occupied by the electrode terminal outside the battery cell and helping to increase energy density of the battery.

## Description

### TECHNICAL FIELD

This application relates to the field of battery technologies, and specifically, to an end cover assembly, a battery cell, a battery, and an electric device.

### BACKGROUND

Energy conservation and emission reduction are crucial to the sustainable development of the automotive industry. Electric vehicles, with their advantages in energy conservation and environment protection, have become an important part of sustainable development of the automobile industry. For electric vehicles, battery technology is an important factor in connection with their development.

In battery technology, both safety and performance of batteries need to be considered, and the energy density of batteries affects the performance of batteries. Therefore, how energy density of batteries is enhanced is an urgent technical problem that needs to be solved in battery technology.

### SUMMARY

Embodiments of this application provide an end cover assembly, a battery cell, a battery, and an electric device, to effectively increase energy density of batteries.

According to a first aspect, an embodiment of this application provides an end cover assembly including: an end cover having an abutting surface; a terminal assembly including an electrode terminal and a connecting member, the connecting member being configured to connect the electrode terminal and the end cover so as to fix the electrode terminal to the end cover, and the connecting member abutting against the abutting surface; where the abutting surface is provided with a concave portion recessed in a thickness direction of the end cover, and the concave portion is configured to accommodate a part of the electrode terminal.

In the above technical solution, the abutting surface, configured to abut against the connecting member, of the end cover is provided with the concave portion, and the concave portion can accommodate a part of the electrode terminal, so that this part of the electrode terminal sinks into the concave portion, reducing space occupied by the electrode terminal outside the battery cell and helping to increase energy density of the battery.

In some embodiments, in the thickness direction, the electrode terminal has a first end and a second end opposite to each other, where the first end is located in the concave portion, and the second end is farther away from a bottom surface of the concave portion than an outer surface of the end cover.

In the above technical solution, the first end of the electrode terminal is located in the concave portion, so that the bottom of the electrode terminal sinks into the concave portion, reducing the space occupied by the electrode terminal outside the battery cell. The second end of the electrode terminal is farther away from the bottom surface of the concave portion than the outer surface of the end cover, so that the electrode terminal partially extends out of the outer surface of the end cover, facilitating electrical connection between the electrode terminal and another component, thereby outputting electrical energy of the battery cell.

In some embodiments, in the thickness direction, the outer surface of the end cover is farther away from the bottom surface of the concave portion than the abutting surface.

In the above technical solution, the outer surface of the end cover is farther away from the bottom surface of the concave portion than the abutting surface in the thickness direction of the end cover, so that the abutting surface is located between the outer surface of the end cover and the bottom surface of the concave portion in the thickness direction of the end cover. The abutting surface is a step surface lower than the outer surface of the end cover, and therefore after the connecting member abuts against the abutting surface, the size of a portion of the connecting member extending out of the outer surface of the end cover can be reduced, thereby reducing the space occupied by the connecting member outside the battery cell.

In some embodiments, the end cover includes: a body portion having the abutting surface, where in the thickness direction, the abutting surface and an inner surface of the body portion face away from each other; and a convex portion disposed at a position of the body portion corresponding to the concave portion and extending out from the inner surface of the body portion in a direction leaving the abutting surface.

In the above technical solution, the convex portion extends out from the inner surface of the body portion in a direction leaving the abutting surface, the convex portion is disposed at a position on the body portion corresponding to the concave portion, and the convex portion can provide space for arranging the concave portion; therefore, the position on the end cover for arranging the concave portion has a desired strength, and also the concave portion can be recessed downward as far as possible, helping to increase depth of the concave portion so as to provide a larger space for the electrode terminal.

In some embodiments, a bottom surface of the concave portion is farther away from the abutting surface than the inner surface of the body portion.

In the above technical solution, the bottom surface of the concave portion is farther away from the abutting surface than the inner surface of the body portion, so that the concave portion is recessed into the convex portion, increasing the depth of the concave portion, thereby providing a larger space for the electrode terminal.

In some embodiments, the end cover includes a solid portion located at the bottom of the concave portion in the thickness direction; the solid portion is provided with a terminal lead-out hole communicating with the concave portion; and in the thickness direction, the electrode terminal is disposed opposite the terminal lead-out hole, and the electrode terminal and the solid portion are spaced apart.

In the above technical solution, the solid portion is provided with the terminal lead-out hole communicating with the concave portion, and the electrode terminal and the terminal lead-out hole are disposed opposite each other in the thickness direction of the end cover, facilitating electrical connection between the electrode assembly and the electrode terminal of the battery cell. The electrode terminal and the solid portion are spaced apart in the thickness direction of the end cover, so that there is distance but no contact between the electrode terminal and the solid portion, reducing the risk of short circuit between a positive electrode and a negative electrode of the battery cell.

In some embodiments, the end cover assembly further includes a sealing member. In the thickness direction, the sealing member is at least partially located between the electrode terminal and the solid portion so as to implement hermetic connection between the electrode terminal and the end cover.

In the above technical solution, the sealing member is at least partially located between the electrode terminal and the solid portion in the thickness direction of the end cover. The sealing member can implement hermetic connection between the electrode terminal and the end cover, thereby reducing the risk of leakage of electrolyte in the battery cell via the terminal lead-out hole. Located between the electrode terminal and the solid portion, the sealing member is also capable of separating the electrode terminal from the solid portion, thereby implementing insulated connection between the electrode terminal and the end cover.

In some embodiments, the sealing member includes: a sealing portion, where in the thickness direction, the sealing portion is at least partially located between the electrode terminal and the solid portion; and an extension portion connected to the sealing portion, where the extension portion is at least partially located in the terminal lead-out hole, and the extension portion extends along a circumferential direction of the terminal lead-out hole.

In the above technical solution, the sealing portion of the sealing member is at least partially located between the electrode terminal and the solid portion in the thickness direction of the end cover, with a function of sealing the electrode terminal and the solid portion, thereby implementing hermetic connection between the electrode terminal and the end cover. The extension portion of the sealing member is at least partially located in the terminal lead-out hole, the extension portion extends along a circumferential direction of the terminal lead-out hole, and the extension portion achieves a good positioning effect, implementing accurate installation of the sealing member.

In some embodiments, in the thickness direction, the terminal lead-out hole is totally covered by the electrode terminal.

In the above technical solution, the terminal lead-out hole is totally covered by the electrode terminal in the thickness direction of the end cover. Such structure increases a radial size of the electrode terminal, facilitating connection between the electrode terminal and another component, thereby outputting electrical energy of the battery cell.

In some embodiments, the terminal assembly further includes an insulating member connected to the electrode terminal and the connecting member, where the insulating member is configured to insulate the electrode terminal from the connecting member, and the concave portion is configured to accommodate a part of the insulating member.

In the above technical solution, the insulating member is capable of not only connecting the electrode terminal and the connecting member but also insulating the electrode terminal from the connecting member, thereby implementing insulation between the electrode terminal and the connecting member and reducing the risk of short circuit between the positive electrode and the negative electrode of the battery cell. A part of the insulating member being accommodated in the concave portion reduces the space occupied by the insulating member outside the battery cell. In addition, the insulating member being accommodated in the concave portion can implement positioning together with the end cover and can implement rapid installation of the connecting member, insulating member and electrode terminal as a whole together with the end cover.

In some embodiments, the insulating member abuts against a bottom surface of the concave portion.

In the above technical solution, the insulating member abutting against the bottom surface of the concave portion improves the stability after the insulating member is accommodated in the concave portion, and also increases the size of a portion of the insulating member sinking into the concave portion in the thickness direction of the end cover, thereby further reducing the space occupied by the insulating member outside the battery cell.

In some embodiments, the concave portion has an inner circumferential surface for guiding the insulating member to enter the concave portion, and in a direction from the abutting surface to the bottom surface of the concave portion, the inner circumferential surface has a radial size decreasing gradually.

In the above technical solution, the radial size of the inner circumferential surface of the concave portion gradually decreases along a direction from the abutting surface to the bottom surface of the concave portion. The inner circumferential surface with such structure can play a good guidance effect on the insulating member, so that when the insulating member, connecting member and electrode terminal as a whole are assembled with the end cover, the insulating member can enter the concave portion more easily, improving the assembly efficiency.

In some embodiments, the insulating member wraps an outer circumferential surface of the electrode terminal in a circumferential direction of the electrode terminal.

In the above technical solution, the insulating member wraps the outer circumferential surface of the electrode terminal in the circumferential direction of the electrode terminal, so that the insulating member and the electrode terminal have good firmness. In addition, good insulation is maintained between the electrode terminal and the connecting member.

In some embodiments, the connecting member includes: a first connecting portion configured to abut against the abutting surface and connect to the end cover; and a second connecting portion, located on an inner circumferential side of the first connecting portion, where in the thickness direction, the second connecting portion is farther away from the abutting surface than the first connecting portion, and the second connecting portion is configured to connect to the insulating member and prevent the electrode terminal from moving relative to the end cover along a direction leaving the end cover.

In the above technical solution, the first connecting portion abuts against the abutting surface and is connected to the end cover, so that the connecting member is connected to the end cover. The second connecting portion is connected to the insulating member and limits the position of the electrode terminal, so that the electrode terminal is prevented from moving relative to the end cover along the direction leaving the end cover. A part of the electrode terminal is accommodated in the concave portion, so that the entire electrode terminal moves down, reducing the distance between the first connecting portion and the second connecting portion in the thickness direction of the end cover and enhancing strength of the connecting member.

In some embodiments, the connecting member further includes a third connecting portion configured to connect the first connecting portion and the second connecting portion, where the third connecting portion is provided with a through hole, and the insulating member is partially located in the through hole.

In the above technical solution, the insulating member is partially located in the through hole, allowing better firmness of connection between the insulating member and the connecting member, and making them less likely to separate from each other.

In some embodiments, the connecting member includes a first connecting portion configured to abut against the abutting surface and connect to the end cover; and an outer surface of the end cover is provided with an accommodating portion, where the accommodating portion is configured to accommodate at least a part of the first connecting portion, and the abutting surface is a bottom surface of the accommodating portion.

In the above technical solution, the first connecting portion of the connecting member being at least partially accommodated in the accommodating portion can reduce the size of a portion of the connecting member extending out of the outer surface of the end cover and reduce the space occupied by the connecting member outside the battery cell.

In some embodiments, in the thickness direction, the outer surface of the end cover is flush with an outer surface of the first connecting portion.

In the above technical solution, the outer surface of the end cover is flush with the outer surface of the first connecting portion in the thickness direction of the end cover. Such structure prevents the first connecting portion from extending out of the outer surface of the end cover, thereby reducing space occupied by the first connecting portion outside the battery cell.

In some embodiments, the first connecting portion is welded to the end cover.

In the above technical solution, the first connecting portion is welded to the end cover. Such simple connection manner between the first connecting portion and the end cover guarantees good firmness of connection between the first connecting portion and the end cover.

According to a second aspect, an embodiment of this application provides a battery cell. The battery cell includes: a housing having an opening; an electrode assembly configured to be accommodated in the housing; and the end cover assembly provided in any one of the embodiments of the first aspect. The end cover is configured to cover the opening; and in a thickness direction of the end cover, the concave portion is recessed from the abutting surface in a direction approaching the electrode assembly.

According to a third aspect, an embodiment of this application provides a battery including the battery cell provided in any one of the embodiments of the second aspect; and a box configured to accommodate the battery cell.

According to a fourth aspect, an embodiment of this application provides an electric device including the battery provided in any one of the embodiments of the third aspect.

According to a fifth aspect, an embodiment of this application provides a manufacturing method for end cover assembly. The method includes: providing an end cover, where the end cover has an abutting surface, and the abutting surface is provided with a concave portion recessed in a thickness direction of the end cover; providing a terminal assembly, where the terminal assembly includes an electrode terminal and a connecting member, the connecting member being connected to the electrode terminal; and making the connecting member abut against the abutting surface and connecting the connecting member and the end cover so that the electrode terminal is partially located in the concave portion.

According to a sixth aspect, an embodiment of this application further provides a manufacturing device for end cover assembly. The manufacturing device includes: a first providing apparatus configured to provide an end cover, where the end cover has an abutting surface, and the abutting surface is provided with a concave portion recessed in a thickness direction of the end cover; a second providing apparatus configured to provide a terminal assembly, where the terminal assembly includes an electrode terminal and a connecting member, the connecting member being connected to the electrode terminal; and an assembling apparatus configured to make the connecting member abut against the abutting surface and connect the connecting member and the end cover so that the electrode terminal is partially located in the concave portion.

### BRIEF DESCRIPTION OF DRAWINGS

To describe the technical solutions of the embodiments of this application more clearly, the following briefly describes the accompanying drawings required for describing the embodiments. It should be understood that the accompanying drawings below show merely some embodiments of this application and therefore should not be considered as limitations on the scope. Persons of ordinary skill in the art may still derive other related drawings from these accompanying drawings without creative efforts.
FIG. 1 is a schematic structural diagram of a vehicle according to some embodiments of this application;
FIG. 2 is a schematic structural diagram of a battery according to some embodiments of this application;
FIG. 3 is an exploded view of a battery cell according to some embodiments of this application;
FIG. 4 is an exploded view of an end cover assembly shown in FIG. 3;
FIG. 5 is a partial cross-sectional view of an end cover assembly according to some embodiments of this application;
FIG. 6 is a schematic structural diagram of a terminal assembly shown in FIG. 5;
FIG. 7 is a schematic structural diagram of a connecting member shown in FIG. 6;
FIG. 8 is a partial cross-sectional view of an end cover shown in FIG. 5;
FIG. 9 is a flowchart of a manufacturing method for end cover assembly according to some embodiments of this application; and
FIG. 10 is a schematic block diagram of a manufacturing device for end cover assembly according to some embodiments of this application.

Reference signs: 10. box; 11. first portion; 12. second portion; 20. battery cell; 21. housing; 22. electrode assembly; 221. positive electrode tab; 222. negative electrode tab; 23. end cover assembly; 231. end cover; 2311. abutting surface; 2312. concave portion; 2312a. bottom surface; 2312b. inner circumferential surface; 2313. outer surface; 2314. body portion; 2314a. inner surface; 2315. convex portion; 2316. solid portion; 2317. terminal lead-out hole; 2318. accommodating portion; 232. separating member; 233. pressure relief mechanism; 234. electrode terminal; 2341. first end; 2342. second end; 235. connecting member; 2351. first connecting portion; 2352. second connecting portion; 2353. third connecting portion; 2354. through hole; 236. sealing member; 2361. sealing portion; 2362. extension portion; 237. insulating member; 24. current collection member; 100. battery; 200. controller; 300. motor; 1000. vehicle; 2000. manufacturing device; 2100. first providing apparatus; 2200. second providing apparatus; 2300. assembling apparatus; and Z. thickness direction.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the embodiments described are some rather than all of the embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by persons skilled in the art to which this application relates. The terms used in the specification of this application are intended to merely describe the specific embodiments rather than to limit this application. The terms "include", "comprise", and any variation thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular sequence or relative importance.

Reference to "embodiment" in this application means that specific features, structures, or characteristics described with reference to the embodiments may be included in at least one embodiment of this application. The word "embodiment" appearing in various places in the specification does not necessarily refer to the same embodiment or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection, and may refer to a direct connection, an indirect connection via an intermediate medium, or an internal communication between two elements. Persons of ordinary skill in the art can understand specific meanings of these terms in this application as appropriate to specific situations.

In the embodiments of this application, the same reference signs denote the same components. For brevity, in different embodiments, detailed descriptions of the same components are not repeated. It should be understood that, as shown in the accompanying drawings, sizes such as thickness, length, and width of various components and sizes such as overall thickness, length, and width of integrated devices in the embodiments of this application are merely for illustrative purposes and should not constitute any limitation on this application.

In this application, "a plurality of" means more than two (inclusive).

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes. This is not limited in the embodiments of this application either. Battery cells are typically classified into three types by packaging method: cylindrical cells, prismatic cells, and pouch cells. This is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matters from affecting charging or discharging of the battery cells.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The part of the positive electrode current collector uncoated with the positive electrode active substance layer protrudes out of the part of the positive electrode current collector coated with the positive electrode active substance layer and serves as a positive electrode tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The part of the negative electrode current collector uncoated with the negative electrode active substance layer protrudes out of the part of the negative electrode current collector coated with the negative electrode active substance layer and serves as a negative electrode tab. The negative electrode current collector may be made of copper, and the negative electrode active substance may be carbon, silicon, or the like. To allow a large current to pass through without any fusing, a plurality of positive electrode tabs are provided and stacked together, and a plurality of negative electrode tabs are provided and stacked together. The separator may be made of PP (polypropylene, polypropylene), PE (polyethylene, polyethylene), or the like. In addition, the electrode assembly may be a wound structure or a laminated structure, but the embodiments of this application are not limited thereto.

For the development of battery technology, various design factors need to be considered, for example, performance parameters such as energy density, cycle life, discharge capacity, and charge and discharge rate.

In a battery cell, an end cover assembly typically includes an end cover, an electrode terminal, and a connecting member. The electrode terminal is fixed to the end cover via the connecting member; the electrode terminal is configured to electrically connect to the electrode assembly; and the electrode terminal is a component for outputting electrical energy of the battery cell.

The inventors have found that to ensure connection between the electrode terminal and another component (for example, a busbar), a part of the electrode terminal extending out of the outer surface of the end cover has a large size in the thickness direction of the end cover, so the electrode terminal occupies a large space outside the battery cell, resulting in a large size of the battery cell in the thickness direction of the end cover. In a battery, the electrode terminal of the battery cell occupying a large space in the box reduces the energy density of the battery.

In view of this, an embodiment of this application provides an end cover assembly. An abutting surface on the end cover that is configured to abut against the connecting member is provided with a concave portion; the concave portion is recessed in a thickness direction of the end cover; and the concave portion is configured to accommodate a part of an electrode terminal.

In such an end cover assembly, the abutting surface, configured to abut against the connecting member, of the end cover is provided with the concave portion capable of accommodating a part of the electrode terminal, so that this part of the electrode terminal sinks into the concave portion, reducing space occupied by the electrode terminal outside the battery cell and helping to increase energy density of the battery.

The technical solution described in this embodiment of this application is applicable to batteries and electric devices using batteries.

The electric device may be a vehicle, a mobile phone, a portable device, a notebook computer, a ship, a spacecraft, an electric toy, an electric tool, or the like. The vehicle may be a fossil fuel vehicle, a gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The foregoing electric device is not particularly limited in this embodiment of this application.

For ease of description, the electric device being a vehicle is used as an example for description of the following embodiments.

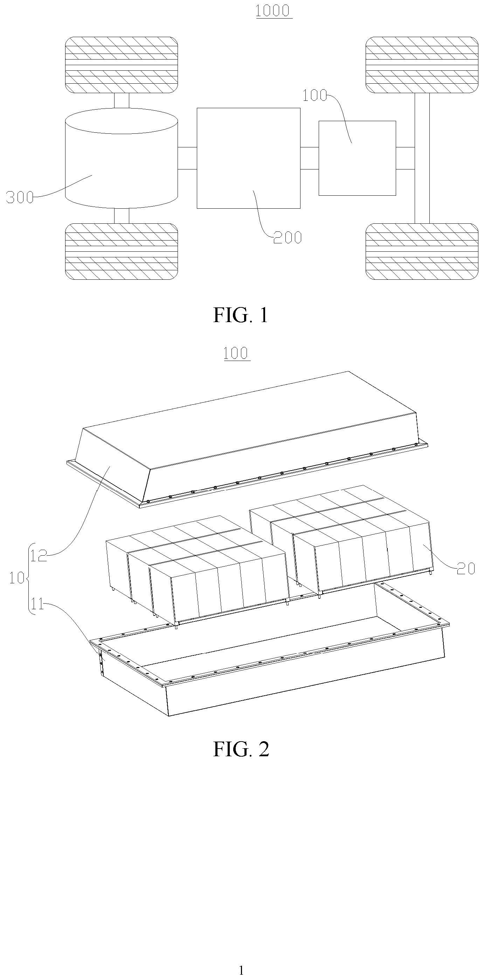

Refer to FIG. 1. FIG. 1 is a schematic structural diagram of a vehicle 1000 according to some embodiments of this application. The vehicle 1000 is provided with a battery 100 inside, where the battery 100 may be disposed at the bottom, front or rear of the vehicle 1000. The battery 100 may be configured to supply power to the vehicle 1000. For example, the battery 100 may be used as an operational power source for the vehicle 1000.

The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Refer to FIG. 2. FIG. 2 is a schematic structural diagram of a battery 100 according to some embodiments of this application. The battery 100 includes a box 10 and a battery cell 20, where the box 10 is configured to accommodate the battery cell 20.

The box 10 is a component for accommodating the battery cell 20, providing an accommodating space for the battery cell 20. The box 10 may be a variety of structures. In some embodiments, the box 10 may include a first portion 11 and a second portion 12. The first portion 11 and the second portion 12 fit together to jointly define an accommodating space for accommodating the battery cell 20. The first portion 11 and the second portion 12 may have a variety of shapes, for example, cuboid, cylinder, or the like. The first portion 11 may be a hollow structure with one side open, and the second portion 12 may also be a hollow structure with one side open, where the open side of the second portion 12 is engaged with the open side of the first portion 11 so as to form a box 10 having an accommodating space. Alternatively, the first portion 11 may be a hollow structure with one side open, and the second portion 12 may be a plate structure. The second portion 12 covers the open side of the first portion 11 so as to form a box 10 having an accommodating space. The first portion 11 and the second portion 12 may be sealed by a sealing element, and the sealing element may be a sealing ring, a sealing adhesive, or the like.

In the battery 100, one or a plurality of battery cells 20 may be provided. If a plurality of battery cells 20 are provided, the plurality of battery cells 20 may be connected in series, parallel, or series-parallel, where being connected in series-parallel means a combination of series and parallel connections of the plurality of battery cells 20. The plurality of battery cells 20 may be first connected in series, parallel, or series-parallel to form battery modules, and then a plurality of battery modules are connected in series, parallel, or series-parallel to form an entirety which is accommodated in the box 10. It is also possible that all the battery cells 20 are directly connected in series, parallel, or series-parallel to form an entirety which is then accommodated in the box 10.

In some embodiments, the battery 100 may further include a busbar, and the plurality of battery cells 20 may be electrically connected through the busbar, so that the plurality of battery cells 20 are connected in series, parallel, or series-parallel. The busbar may be a metal conductor, for example, copper, iron, aluminum, stainless steel, and aluminum alloy.

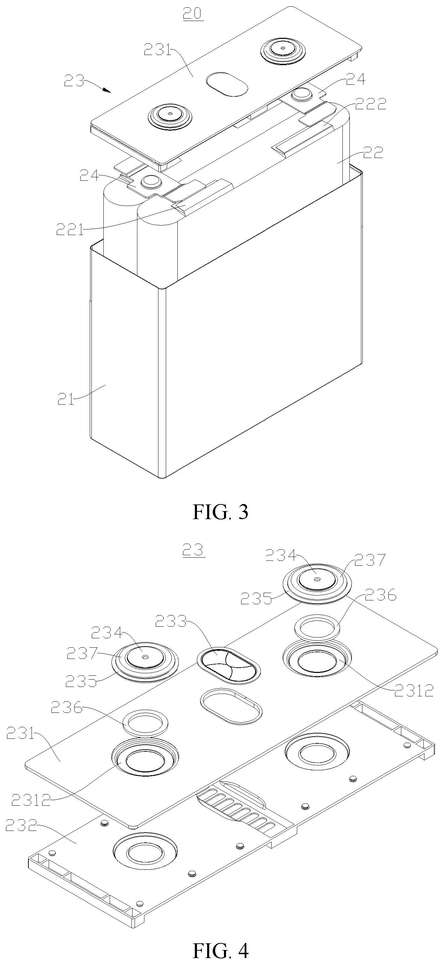

Refer to FIG. 3. FIG. 3 is an exploded view of a battery cell 20 according to some embodiments of this application. The battery cell 20 refers to the smallest unit of the battery 100, where the battery cell 20 includes a housing 21, an electrode assembly 22, and an end cover assembly 23.

The housing 21 is a component configured to accommodate the electrode assembly 22. The housing 21 may be a hollow structure with an opening formed in one end; or the housing 21 may be a hollow structure with openings formed in two ends. The housing 21 may be of various shapes, such as a cylindrical shape and a cuboid shape. The housing 21 may be made of various materials, for example, copper, iron, aluminum, steel, and aluminum alloy.

There may be one or more electrode assemblies 22 in the housing 21. For example, as shown in FIG. 3, there are a plurality of electrode assemblies 22, and the plurality of electrode assemblies 22 are stacked.

The electrode assembly 22 is a component in which electrochemical reactions take place in the battery cell 20. The electrode assembly 22 may include a positive electrode plate, a negative electrode plate, and a separator. The electrode assembly 22 may be a wound structure formed by winding the positive electrode plate, the separator, and the negative electrode plate, or may be a laminated structure formed by laminating the positive electrode plate, the separator, and the negative electrode plate.

The positive electrode plate may include a positive electrode current collector and positive electrode active substance layers applied on two opposite sides of the positive electrode current collector. The negative electrode plate may include a negative electrode current collector and negative electrode active substance layers applied on two opposite sides of the negative electrode current collector. The electrode assembly 22 includes a positive electrode tab 221 and a negative electrode tab 222. The positive electrode tab 221 may be a part of the positive electrode plate that is uncoated with the positive electrode active substance layer, and the negative electrode tab 222 may be a part of the negative electrode plate that is uncoated with the negative electrode active substance layer.

The end cover assembly 23 is a component that covers the opening of the housing 21 to isolate an internal environment of the battery cell 20 from an external environment.

Refer to FIG. 4. FIG. 4 is an exploded view of the end cover assembly 23 shown in FIG. 3. The end cover assembly 23 may include an end cover 231, a terminal assembly, a separating member 232, and a pressure relief mechanism 233.

The end cover 231 is a component covering the opening of the housing 21. The end cover 231 and the housing 21 jointly define a space for accommodating the electrode assembly 22, an electrolyte, and other components. The shape of the end cover 231 may fit the shape of the housing 21. For example, if the housing 21 is a cuboid structure, the end cover 231 is a rectangular plate structure that fits the housing 21. For another example, if the housing 21 is a cylindrical structure, the end cover 231 is a circular plate structure that fits the housing 21. The end cover 231 may also be made of various materials, for example, copper, iron, aluminum, steel, and aluminum alloy. The end cover 231 and the housing 21 may be made of same or different materials.

The terminal assembly may include an electrode terminal 234 and a connecting member 235, where the connecting member 235 is a component configured to fix the electrode terminal 234 to the end cover 231, and the electrode terminal 234 is a component configured to output electrical energy of the battery cell 20. One or two terminal assemblies may be provided on the end cover 231. If one terminal assembly is provided on the end cover 231, the housing 21 may be a hollow structure provided with openings in two ends. Two end cover assemblies 23 are provided in the battery cell 20; the end covers 231 of the two end cover assemblies 23 cover the two openings of the housing 21, respectively; and the electrode terminals 234 of the terminal assemblies in the two end cover assemblies 23 are electrically connected to the positive electrode tab 221 and the negative electrode tab 222 of the electrode assembly 22, respectively. As shown in FIG. 4, if two terminal assemblies are provided on the end cover 231, the housing 21 (shown in FIG. 3) may be a hollow structure provided with an opening in one end, and the electrode terminals 234 in the two terminal assemblies are electrically connected to the positive electrode tab 221 and the negative electrode tab 222 of the electrode assembly 22, respectively.

The electrode terminal 234 in the terminal assembly may be connected to the positive electrode tab or the negative electrode tab of the electrode assembly 22 directly or indirectly. Two terminal assemblies being provided on the end cover 231 is used as an example, where the electrode terminal 234 of one terminal assembly is electrically connected to the positive electrode tab 221 via a current collection member 24, and the electrode terminal 234 of the other terminal assembly is electrically connected to the negative electrode tab 222 via another current collection member 24.

The separating member 232 is a component for separating the end cover 231 from the electrode assembly 22. The separating member 232 is disposed on one side of the end cover 231 facing the electrode assembly 22. The separating member 232 implements insulated separation between the end cover 231 and the electrode assembly 22. The separating member 232 is made of an insulating material such as plastic and rubber.

The pressure relief mechanism 233 is a component for relieving internal pressure of the battery cell 20. The pressure relief mechanism 233 is disposed on the end cover 231 and is configured to relieve the internal pressure of the battery cell 20 when the internal pressure or temperature of the battery cell 20 reaches a threshold. The pressure relief mechanism 233 may be a component such as an explosion-proof valve, a rupture disk, and a pressure relief valve.

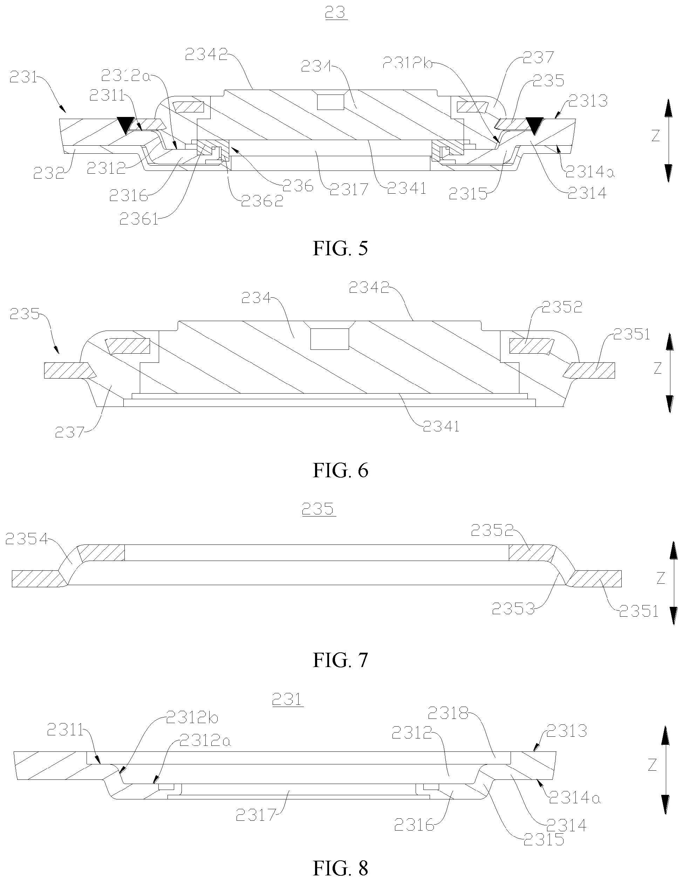

Refer to FIG. 5. FIG. 5 is a partial cross-sectional view of an end cover assembly 23 according to some embodiments of this application. An embodiment of this application provides an end cover assembly 23. The end cover assembly 23 includes an end cover 231 and a terminal assembly. The end cover 231 has an abutting surface 2311. The terminal assembly includes an electrode terminal 234 and a connecting member 235, where the connecting member 235 is configured to connect the electrode terminal 234 and the end cover 231 so as to fix the electrode terminal 234 to the end cover 231, and the connecting member 235 abuts against the abutting surface 2311. The abutting surface 2311 is provided with a concave portion 2312 recessed in a thickness direction Z of the end cover 231, and the concave portion 2312 is configured to accommodate a part of the electrode terminal 234.

The end cover 231 is a component covering the opening of the housing 21. The abutting surface 2311 of the end cover 231 is a surface of the end cover 231 for the connecting member 235 to abut against. The abutting surface 2311 may be an outer surface 2313 of the end cover 231, or may be a step surface lower than the outer surface 2313 of the end cover 231. The outer surface 2313 of the end cover 231 is an outermost surface of the end cover 231 facing away from the housing 21 in the thickness direction Z of the end cover 231 after the end cover 231 covers the opening of the housing 21.

The electrode terminal 234 is a component for outputting electrical energy of the battery cell 20, and the electrode terminal 234 is configured to connect to another component to output the electrical energy of the battery cell 20. For example, when a plurality of battery cells 20 in the battery 100 are connected in series, parallel, or series-parallel via the busbar, the electrode terminal 234 and the busbar are welded together.

The connecting member 235 is a component for fixing the electrode terminal 234 to the end cover 231, and the connecting member 235 is configured to connect the electrode terminal 234 and the end cover 231. The connecting member 235 and the end cover 231 may be connected in various manners. For example, the connecting member 235 and the end cover 231 are welded, adhered, or the like. The connecting member 235 may abut against the abutting surface 2311 in the thickness direction Z of the end cover 231. The connecting member 235 may abut against the abutting surface 2311 directly, or abut against the abutting surface 2311 indirectly. If the connecting member 235 abuts against the abutting surface 2311 directly, the connecting member 235 and the end cover 231 may be connected by welding; and if the connecting member 235 abuts against the abutting surface 2311 indirectly, an adhesive layer may be provided between the connecting member 235 and the abutting surface 2311 to adhere the connecting member 235 to the end cover 231. The connecting member 235 and the electrode terminal 234 may be connected directly or indirectly. For example, the connecting member 235 is made of an insulating material (for example, plastic or rubber), the connecting member 235 and the electrode terminal 234 may be connected directly, the connecting member 235 may be connected to the electrode terminal 234 in a way of wrapping an outer side surface of the electrode terminal 234, and the connecting member 235 may be connected to the end cover 231 by adhesion. For another example, the connecting member 235 is made of a metal material (for example, copper, iron, aluminum, steel, or aluminum alloy), the connecting member 235 may be indirectly connected to the electrode terminal 234 via an insulating member 237, and the connecting member 235 may be connected to the end cover 231 by welding.

The abutting surface 2311 is provided with a concave portion 2312 recessed in a thickness direction Z of the end cover 231, and a depth direction of the concave portion 2312 is the thickness direction Z of the end cover 231. In the battery cell 20, in the thickness direction Z of the end cover 231, the concave portion 2312 is recessed from the abutting surface 2311 in a direction approaching the electrode assembly 22 (shown in FIG. 3). The concave portion 2312 can provide space for sinking of the electrode terminal 234, the bottom end (the end close to the electrode assembly 22) of the electrode terminal 234 is lower than the abutting surface 2311.

For a general battery cell 20, after the connecting member 235 abuts against the abutting surface 2311, the bottom end of the electrode terminal 234 is above the abutting surface 2311, so that a portion of the electrode terminal 234 extending out of the outer surface 2313 of the end cover 231 has a large size in the thickness direction Z of the end cover 231.

In this embodiment of this application, the abutting surface 2311, configured to abut against the connecting member 235, of the end cover 231 is provided with the concave portion 2312, and the concave portion 2312 can accommodate a part of the electrode terminal 234, so that this part of the electrode terminal 234 sinks into the concave portion 2312, reducing space occupied by the electrode terminal 234 outside the battery cell 20 and helping to increase the energy density of the battery 100.

In some embodiments, still refer to FIG. 5. In the thickness direction Z of the end cover 231, the electrode terminal 234 includes a first end 2341 and a second end 2342 opposite to each other; the first end 2341 is located in the concave portion 2312; and the second end 2342 is farther away from a bottom surface 2312a of the concave portion 2312 than the outer surface 2313 of the end cover 231.

The first end 2341 of the electrode terminal 234 is the bottom end of the electrode terminal 234, and is also an end of the electrode terminal 234 closer to the electrode assembly 22 (shown in FIG. 3) in the thickness direction Z of the end cover 231. The second end 2342 of the electrode terminal 234 is the top end of the electrode terminal 234, and is also an end of the electrode terminal 234 farther away from the electrode assembly 22 in the thickness direction Z of the end cover 231.

The bottom surface 2312a of the concave portion 2312 is a surface connected to an inner circumferential surface 2312b of the concave portion 2312, and is also a surface of the concave portion 2312 closest to the electrode assembly 22. The bottom surface 2312a of the concave portion 2312 may be a flat surface perpendicular to the thickness direction Z of the end cover 231.

In these embodiments, the first end 2341 of the electrode terminal 234 is located in the concave portion 2312, so that the bottom of the electrode terminal 234 sinks into the concave portion 2312, reducing the space occupied by the electrode terminal outside the battery cell 20. The second end 2342 of the electrode terminal 234 is farther away from the bottom surface 2312a of the concave portion 2312 than the outer surface 2313 of the end cover 231, so that the electrode terminal 234 partially extends out of the outer surface 2313 of the end cover 231, facilitating electrical connection between the electrode terminal 234 and another component (for example, a busbar), thereby outputting electrical energy of the battery cell 20.

In some embodiments, still refer to FIG. 5. In the thickness direction Z of the end cover 231, the outer surface 2313 of the end cover 231 is farther away from the bottom surface 2312a of the concave portion 2312 than the abutting surface 2311.

The outer surface 2313 of the end cover 231 is farther away from the bottom surface 2312a than the abutting surface 2311 in the thickness direction Z of the end cover 231. It can be understood that in these embodiments, the outer surface 2313 of the end cover 231 and the abutting surface 2311 are not one surface, but are two surfaces staggered in the thickness direction Z of the end cover 231.

In these embodiments, the outer surface 2313 of the end cover 231 is farther away from the bottom surface 2312a of the concave portion 2312 than the abutting surface 2311 in the thickness direction Z of the end cover 231, so that the abutting surface 2311 is located between the outer surface 2313 of the end cover 231 and the bottom surface 2312a of the concave portion 2312 in the thickness direction Z of the end cover 231. The abutting surface 2311 is a step surface lower than the outer surface 2313 of the end cover 231, therefore after the connecting member 235 abuts against the abutting surface 2311, the size of a portion of the connecting member 235 extending out of the outer surface 2313 of the end cover 231 can be reduced, thereby reducing the space occupied by the connecting member 235 outside the battery cell 20.

In some embodiments, still refer to FIG. 5. The end cover 231 includes a body portion 2314 and a convex portion 2315. The body portion 2314 has the abutting surface 2311. In the thickness direction Z of the end cover 231, the abutting surface 2311 and an inner surface 2314a of the body portion 2314 face away from each other. The convex portion 2315 is disposed at a position of the body portion 2314 corresponding to the concave portion 2312, and extends out from the inner surface 2314a of the body portion 2314 in a direction leaving the abutting surface 2311.

The body portion 2314 is a portion of the end cover 231 for covering the opening of the housing 21. In other words, when the end cover 231 is connected to the housing 21, the body portion 2314 is connected to the end cover 231. The body portion 2314 has the abutting surface 2311, meaning that the abutting surface 2311 is on the body portion 2314. The inner surface 2314a of the body portion 2314 is an innermost surface of the body portion 2314 facing away from the electrode assembly 22 in the thickness direction Z of the end cover 231. The inner surface 2314a of the body portion 2314 is the inner surface 2314a of the end cover 231, and the outer surface 2313 of the body portion 2314 is the outer surface 2313 of the end cover 231.

The concave portion 2312 may be totally located in the body portion 2314; or has one part located in the body portion 2314 and the other part located in the convex portion 2315. The convex portion 2315 may be a truncated cone structure extending out of the body portion 2314. The convex portion 2315 is disposed at a position of the body portion 2314 corresponding to the concave portion 2312, and a smaller radial size of the concave portion 2312 means a smaller radial size of the convex portion 2315.

In these embodiments, the convex portion 2315 extends out from the inner surface 2314a of the body portion 2314 in a direction leaving the abutting surface 2311, the convex portion 2315 is disposed at a position on the body portion 2314 corresponding to the concave portion 2312, and the convex portion 2315 can provide space for arranging the concave portion 2312. Therefore, the position on the end cover 231 for arranging the concave portion 2312 has a desired strength, and also the concave portion 2312 can be recessed downward as far as possible, helping to increase depth of the concave portion 2312 to provide a larger space for the electrode terminal 234.

In some embodiments, still refer to FIG. 5. A bottom surface 2312a of the concave portion 2312 is farther away from the abutting surface 2311 than the inner surface 2314a of the body portion 2314.

The bottom surface 2312a of the concave portion 2312 is farther away from the abutting surface 2311 than the inner surface 2314a of the body portion 2314. That is, a part of the concave portion 2312 is located in the body portion 2314, and the other part is located in the convex portion 2315, so that the concave portion 2312 is recessed into the convex portion 2315, increasing the depth of the concave portion 2312 to provide a larger space for the electrode terminal 234.

In some embodiments, still refer to FIG. 5. The end cover 231 includes a solid portion 2316 at the bottom of the concave portion 2312 in the thickness direction Z, where the solid portion 2316 is provided with a terminal lead-out hole 2317 communicating with the concave portion 2312. In the thickness direction Z of the end cover 231, the electrode terminal 234 and the terminal lead-out hole 2317 are disposed opposite each other, and the electrode terminal 234 and the solid portion 2316 are spaced apart.

The solid portion 2316 is a portion with a thickness, located at the bottom of the concave portion 2312, of the end cover 231 in the thickness direction Z. In the thickness direction Z of the end cover 231, the solid portion 2316 is a portion of the end cover 231 between the bottom surface 2312a of the concave portion 2312 and an end surface of an end of the convex portion 2315 facing away from the inner surface 2314a of the body portion 2314.

In an embodiment in which the electrode terminal 234 and a tab of the electrode assembly 22 are electrically connected via the current collection member 24, the terminal lead-out hole 2317 is configured to lead out the current collection member 24; and the current collection member 24 can partially run through the terminal lead-out hole 2317 to be connected to the electrode terminal 234, so that the electrode terminal 234 and the current collection member 24 are connected together.

The electrode terminal 234 and the solid portion 2316 are spaced apart in the thickness direction Z of the end cover 231. That is, a gap is present between the first end 2341 of the electrode terminal 234 and the bottom surface 2312a of the concave portion 2312.

In this embodiment, the solid portion 2316 is provided with the terminal lead-out hole 2317 communicating with the concave portion 2312, and the electrode terminal 234 and the terminal lead-out hole 2317 are disposed opposite each other in the thickness direction Z of the end cover 231, facilitating electrical connection between the electrode assembly 22 and the electrode terminal 234 of the battery cell 20. The electrode terminal 234 and the solid portion 2316 are spaced apart in the thickness direction Z of the end cover 231, so that there is distance but no contact between the electrode terminal 234 and the solid portion 2316, reducing the risk of short circuit between a positive electrode and a negative electrode of the battery cell 20.

In some embodiments, still refer to FIG. 5. The end cover assembly 23 further includes a sealing member 236. In the thickness direction Z of the end cover 231, the sealing member 236 is at least partially located between the electrode terminal 234 and the solid portion 2316 to implement hermetic connection between the electrode terminal 234 and the end cover 231.

The sealing member 236 is a component for implementing the hermetic connection between the electrode terminal 234 and the end cover 231. The sealing member 236 is at least partially located between the electrode terminal 234 and the solid portion 2316 in the thickness direction Z of the end cover 231. In other words, in the thickness direction Z of the end cover 231, the sealing member 236 may be totally located between the electrode terminal 234 and the solid portion 2316, or partially located between the electrode terminal 234 and the solid portion 2316. The portion of the sealing member 236 located between the electrode terminal 234 and the solid portion 2316 may be in a squeezed state, and this portion is squeezed by the electrode terminal 234 and the solid portion 2316, thereby implementing a better sealing effect.

For example, the sealing member 236 is a rubber ring.

In this embodiment, the sealing member 236 is at least partially located between the electrode terminal 234 and the solid portion 2316 in the thickness direction Z of the end cover 231. The sealing member 236 can implement hermetic connection between the electrode terminal 234 and the end cover 231, thereby reducing the risk of leakage of electrolyte in the battery cell 20 via the terminal lead-out hole 2317. Located between the electrode terminal 234 and the solid portion 2316, the sealing member 236 is also capable of separating the electrode terminal 234 from the solid portion 2316, thereby implementing insulated connection between the electrode terminal 234 and the end cover 231.

In some embodiments, still refer to FIG. 5. The sealing member 236 includes a sealing portion 2361 and an extension portion 2362. In the thickness direction Z of the end cover 231, the sealing portion 2361 is at least partially located between the electrode terminal 234 and the solid portion 2316. The extension portion 2362 is connected to the sealing portion 2361, the extension portion 2362 is at least partially located in the terminal lead-out hole 2317, and the extension portion 2362 extends along a circumferential direction of the terminal lead-out hole 2317.

The sealing portion 2361 is a portion of the sealing member 236, which provides sealing between the electrode terminal 234 and the solid portion 2316. The extension portion 2362 is a portion of the sealing member 236 located in the terminal lead-out hole 2317. The sealing portion 2361 and the extension portion 2362 may both be annular structures. When a portion of the current collection member 24 runs through the terminal lead-out hole 2317 to be connected to the electrode terminal 234, the extension portion 2362 is capable of insulating the current collection member 24 from the solid portion 2316. The insulation of the extension portion 2362 reduces the risk of short circuit between the positive electrode and the negative electrode.

For example, the sealing portion 2361 and the solid portion 2316 are snap-fitted to implement position limitation of the sealing portion 2361 and the solid portion 2316 in a radial direction, thereby reducing the risk of undesirable radial movement of the sealing portion 2361 on the solid portion 2316 and improving airtightness of the electrode terminal 234 and the end cover 231.

In these embodiments, the sealing portion 2361 of the sealing member 236 is at least partially located between the electrode terminal 234 and the solid portion 2316 in the thickness direction Z of the end cover 231, to seal the electrode terminal 234 and the solid portion 2316, thereby implementing hermetic connection between the electrode terminal 234 and the end cover 231. The extension portion 2362 of the sealing member 236 is at least partially located in the terminal lead-out hole 2317, the extension portion 2362 extends along a circumferential direction of the terminal lead-out hole 2317, and the extension portion 2362 achieves a good positioning effect, implementing accurate installation of the sealing member 236. In addition, the extension portion 2362 may also provide an insulation effect to reduce the risk of short circuit between the positive electrode and the negative electrode.

In some embodiments, still refer to FIG. 5. In the thickness direction Z of the end cover 231, the terminal lead-out hole 2317 is totally covered by the electrode terminal 234. In other words, projection of the electrode terminal 234 in the thickness direction Z totally covers the terminal lead-out hole 2317.

The electrode terminal 234 and the terminal lead-out hole 2317 being coaxial is used as an example, where if the electrode terminal 234 has a larger diameter than the terminal lead-out hole 2317, the terminal lead-out hole 2317 is totally covered by the electrode terminal 234 in the thickness direction Z of the end cover 231.

In these embodiments, the terminal lead-out hole 2317 is totally covered by the electrode terminal 234 in the thickness direction Z of the end cover 231. Such structure increases a radial size of the electrode terminal 234, facilitating connection between the electrode terminal 234 and another component, thereby outputting electrical energy of the battery cell 20. For example, the electrode terminal 234 and the busbar are welded to increase the radial size of the electrode terminal 234, and thus a welding area between the electrode terminal 234 and the busbar is increased.

In some other embodiments, in the thickness direction Z of the end cover 231, the terminal lead-out hole 2317 may be partially covered by the electrode terminal 234. For example, the electrode terminal 234 and the terminal lead-out hole 2317 are disposed coaxially, and the electrode terminal 234 has a smaller diameter than the terminal lead-out hole 2317.

In some embodiments, still refer to FIG. 5. The terminal assembly further includes an insulating member 237. The insulating member 237 is connected to the electrode terminal 234 and the connecting member 235. The insulating member 237 is configured to insulate the electrode terminal 234 from the connecting member 235, and the concave portion 2312 is configured to accommodate a part of the insulating member 237.

The insulating member 237 is a component connected between the electrode terminal 234 and the connecting member 235 and configured to insulate the electrode terminal 234 from the connecting member 235. The insulating member 237 may be made of various materials, for example, rubber and plastic. For example, the insulating member 237 is an injection-molded part that is injection-molded between the electrode terminal 234 and the connecting member 235, so that the electrode terminal 234, the connecting member 235 and the insulating member 237 are connected together as a whole.

The insulating member 237 is capable of not only connecting the electrode terminal 234 and the connecting member 235 but also insulating the electrode terminal 234 from the connecting member 235, thereby implementing insulation between the electrode terminal 234 and the connecting member 235 and reducing the risk of short circuit between the positive electrode and the negative electrode of the battery cell 20. A part of the insulating member 237 being accommodated in the concave portion 2312 reduces the space occupied by the insulating member 237 outside the battery cell 20. In addition, the insulating member 237 being accommodated in the concave portion 2312 can implement positioning together with the end cover 231 and can implement rapid installation of the connecting member 235, insulating member 237 and electrode terminal 234 as a whole together with the end cover 231.

In some embodiments, still refer to FIG. 5. The insulating member 237 abuts against a bottom surface 2312a of the concave portion 2312. Such structure improves the stability after the insulating member 237 is accommodated in the concave portion 2312 and also increases the size of a portion of the insulating member 237 sinking into the concave portion 2312 in the thickness direction Z of the end cover 231, thereby further reducing the space occupied by the insulating member 237 outside the battery cell 20 and also enhancing the insulation between the connecting member 235 and the electrode terminal 234.

In other embodiments, a gap may also be present between the insulating member 237 and the bottom surface 2312a of the concave portion 2312.

In some embodiments, still refer to FIG. 5. The concave portion 2312 has an inner circumferential surface 2312b for guiding the insulating member 237 to enter the concave portion 2312, where the inner circumferential surface 2312b has a radial size decreasing gradually in a direction from the abutting surface 2311 to the bottom surface 2312a of the concave portion 2312.

The inner circumferential surface 2312b of the concave portion 2312 is a surface connected to the bottom surface 2312a of the concave portion 2312, and the bottom surface 2312a of the concave portion 2312 is connected to the abutting surface 2311 via the inner circumferential surface 2312b of the concave portion 2312. In other words, the inner circumferential surface 2312b of the concave portion 2312 extends to the bottom surface 2312a of the concave portion 2312 from the abutting surface 2311. The inner circumferential surface 2312b is a structure with a diameter gradually decreasing along a direction from the abutting surface 2311 to the bottom surface 2312a of the concave portion 2312. For example, the inner circumferential surface 2312b is a conical surface.

In these embodiments, the radial size of the inner circumferential surface 2312b of the concave portion 2312 gradually decreases along a direction from the abutting surface 2311 to the bottom surface 2312a of the concave portion 2312. The inner circumferential surface 2312b with such structure can play a good guidance effect on the insulating member 237, so that when the insulating member 237, connecting member 235 and electrode terminal 234 as a whole are assembled with the end cover 231, the insulating member 237 can enter the concave portion 2312 more easily, improving the assembly efficiency.

In some embodiments, the insulating member 237 wraps an outer circumferential surface of the electrode terminal 234 in a circumferential direction of the electrode terminal 234. Such structure not only allows the insulating member 237 and the electrode terminal 234 to have good firmness but also allows the electrode terminal 234 and the connecting member 235 to maintain good insulation therebetween.

Certainly, the insulating member 237 may wrap the outer circumferential surface of the electrode terminal 234 in a manner of injection molding.

In some embodiments, refer to FIG. 6. FIG. 6 is a schematic structural diagram of the terminal assembly shown in FIG. 5, and the connecting member 235 includes a first connecting portion 2351 and a second connecting portion 2352. The first connecting portion 2351 is configured to abut against the abutting surface 2311 (shown in FIG. 5) and connect to the end cover 231 (shown in FIG. 5). The second connecting portion 2352 is located on an inner circumferential side of the first connecting portion 2351. In the thickness direction Z of the end cover 231, the second connecting portion 2352 is farther away from the abutting surface 2311 than the first connecting portion 2351, and the second connecting portion 2352 is configured to connect to the insulating member 237 and prevent the electrode terminal 234 from moving relative to the end cover 231 along a direction leaving the end cover 231.

The first connecting portion 2351 is a portion of the connecting member 235 that is configured to abut against the abutting surface 2311 and connect to the end cover 231, and the second connecting portion 2352 is a portion of the connecting member 235 that is connected to the insulating member 237. In the thickness direction Z of the end cover 231, the second connecting portion 2352 can cover at least a part of the electrode terminal 234, so as to prevent the electrode terminal 234 from moving relative to the end cover 231 along the direction leaving the end cover 231.

For example, the first connecting portion 2351 and the second connecting portion 2352 are both annular structures, where the second connecting portion 2352 is wrapped in the insulating member 237.

In these embodiments, the first connecting portion 2351 abuts against the abutting surface 2311 and is connected to the end cover 231, so that the connecting member 235 is connected to the end cover 231. The second connecting portion 2352 is connected to the insulating member 237 and limits the position of the electrode terminal 234, so that the electrode terminal 234 is prevented from moving along the direction leaving the end cover 231.

In addition, in these embodiments of this application, a part of the electrode terminal 234 is accommodated in the concave portion 2312, so that the entire electrode terminal 234 moves down, reducing the distance between the first connecting portion 2351 and the second connecting portion 2352 in the thickness direction Z of the end cover 231 and enhancing the strength of the connecting member 235.

In some embodiments, refer to FIG. 6 and FIG. 7. FIG. 7 is a schematic structural diagram of the connecting member 235 shown in FIG. 6, the connecting member 235 further includes a third connecting portion 2353, where the third connecting portion 2353 is configured to connect the first connecting portion 2351 and the second connecting portion 2352, the third connecting portion 2353 is provided with a through hole 2354, and the insulating member 237 is partially located in the through hole 2354.

The third connecting portion 2353 is a portion of the connecting member 235 that connects the first connecting portion 2351 and the second connecting portion 2352. For example, the third connecting portion 2353, the second connecting portion 2352 and the first connecting portion 2351 are all annular structures.

In these embodiments, the insulating member 237 is partially located in the through hole 2354, allowing the insulating member 237 and the connecting member 235 to have better firmness after they are connected, thus making them less likely to separate from each other.

In some embodiments, refer to FIG. 5 and FIG. 8. FIG. 8 is a partial cross-sectional view of the end cover 231 shown in FIG. 5. In an embodiment in which the connecting member 235 includes the first connecting portion 2351 configured to abut against the abutting surface 2311 and connect to the end cover 231, an accommodating portion 2318 may be provided at the outer surface 2313 of the end cover 231, where the accommodating portion 2318 is configured to accommodate at least a part of the first connecting portion 2351, and the abutting surface 2311 is a bottom surface 2312a of the accommodating portion 2318.

The accommodating portion 2318 may be a groove provided on the outer surface 2313 of the end cover 231. The accommodating portion 2318 is configured to accommodate at least a part of the first connecting portion 2351, where the first connecting portion 2351 may be totally accommodated in the accommodating portion 2318, or may be partially accommodated in the accommodating portion 2318. For example, the first connecting portion 2351 partially exceeds the outer surface 2313 of the end cover 231.

The bottom surface of the accommodating portion 2318 is a surface connected to an inner circumferential surface 2312b of the accommodating portion 2318, and is also a surface of the accommodating portion 2318 closest to the electrode assembly 22. The bottom surface of the accommodating portion 2318 may be a flat surface perpendicular to the thickness direction Z of the end cover 231. The abutting surface 2311 is the bottom surface of the accommodating portion 2318, so that the abutting surface 2311 is a step surface lower than the outer surface 2313 of the end cover 231.

In these embodiments, the first connecting portion 2351 of the connecting member 235 being at least partially accommodated in the accommodating portion 2318 can reduce the size of a portion of the connecting member 235 extending out of the outer surface 2313 of the end cover 231 and reduce the space occupied by the connecting member 235 outside the battery cell 20.

In some embodiments, still refer to FIG. 5. In the thickness direction Z of the end cover 231, the outer surface 2313 of the end cover 231 is flush with the outer surface of the first connecting portion 2351.

The outer surface of the first connecting portion 2351 is a surface of the first connecting portion 2351 facing away from the electrode assembly 22 in the thickness direction Z of the end cover 231. The outer surface 2313 of the end cover 231 is flush with the outer surface of the first connecting portion 2351. That is, the outer surface 2313 of the end cover 231 and the outer surface of the first connecting portion 2351 are one surface.

In these embodiments, the outer surface 2313 of the end cover 231 is flush with the outer surface of the first connecting portion 2351 in the thickness direction Z of the end cover 231. Such structure prevents the first connecting portion 2351 from extending out of the outer surface 2313 of the end cover 231, thereby reducing space occupied by the first connecting portion 2351 outside the battery cell 20.

In some embodiments, the first connecting portion 2351 is welded to the end cover 231.

In the case that the first connecting portion 2351 of the connecting member 235 is at least partially accommodated in the accommodating portion 2318, the first connecting portion 2351 and the end cover 231 may be welded in a space welding manner. After the first connecting portion 2351 and the end cover 231 are welded, a weld mark is formed at a welded joint between the first connecting portion 2351 and the end cover 231.

In the case that the outer surface 2313 of the end cover 231 is flush with the outer surface of the first connecting portion 2351, the first connecting portion 2351 and the end cover 231 achieve better firmness after welded in the manner of space welding, facilitating welding and ensuring the welding quality.

In these embodiments, the first connecting portion 2351 is welded to the end cover 231. Such simple connection manner between the first connecting portion 2351 and the end cover 231 guarantees good firmness of connection between the first connecting portion 2351 and the end cover 231.

An embodiment of this application provides a battery cell 20. The battery cell 20 includes a housing 21, an electrode assembly 22, and the end cover assembly 23 provided in any one of the foregoing embodiments. The housing 21 has an opening. The electrode assembly 22 is configured to be accommodated in the housing 21. The end cover 231 of the electrode assembly 22 is configured to cover the opening. In the thickness direction Z of the end cover 231, the concave portion 2312 is recessed from the abutting surface 2311 in a direction approaching the electrode assembly 22.

An embodiment of this application provides a battery 100. The battery 100 includes a box 10, and the battery cell 20 provided in any one of the foregoing embodiments. The box 10 is configured to accommodate the battery cell 20.

An embodiment of this application provides an electric device including the battery 100 provided in any one of the foregoing embodiments.

The electric device may be any one of the foregoing devices using the battery 100.

In addition, refer to FIG. 5. An embodiment of this application provides an electrode assembly 22. The end cover assembly 23 includes an end cover 231 and a terminal assembly. The end cover 231 has an abutting surface 2311. The terminal assembly includes an electrode terminal 234, a connecting member 235, and an insulating member 237, where the insulating member 237 is connected to the electrode terminal 234 and the connecting member 235; the insulating member 237 is configured to separate the electrode terminal 234 from the connecting member 235; and the connecting member 235 abuts against the abutting surface 2311 and is welded to the end cover 231 so as to fix the electrode terminal 234 to the end cover 231. The abutting surface 2311 is provided with a concave portion 2312 recessed in the thickness direction Z of the end cover 231, and the concave portion 2312 is configured to accommodate a part of the electrode terminal 234 and a part of the insulating member 237.

In such electrode assembly 22, the electrode terminal 234 and the insulating member 237 are both partially accommodated in the concave portion 2312, so that the electrode terminal 234 and the insulating member 237 both partially sink into the concave portion 2312, reducing the space occupied by the electrode terminal 234 and the insulating member 237 outside the battery cell 20 and helping to increase the energy density of the battery 100.

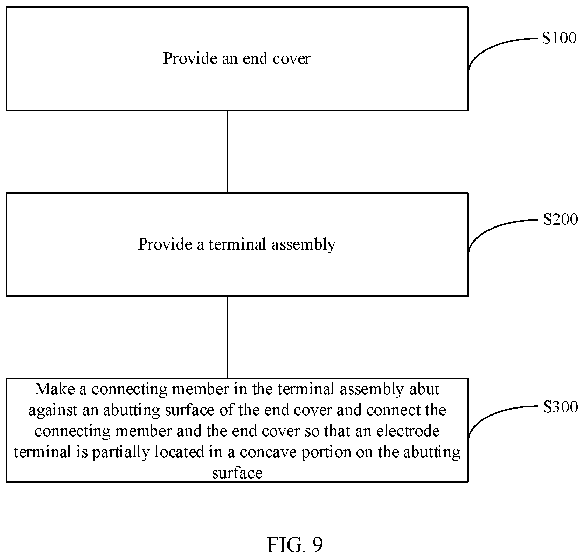

An embodiment of this application provides a manufacturing method for end cover assembly 23. Refer to FIG. 9. FIG. 9 is a flowchart of a manufacturing method for end cover assembly 23 according to some embodiments of this application. The method includes:
S100. Provide an end cover 231, where the end cover 231 has an abutting surface 2311, and the abutting surface 2311 is provided with a concave portion 2312 recessed in a thickness direction Z of the end cover 231.
S200. Provide a terminal assembly, where the terminal assembly includes an electrode terminal 234 and a connecting member 235, and the connecting member 235 is connected to the electrode terminal 234.
S300. Make the connecting member 235 in the terminal assembly abut against the abutting surface 2311 of the end cover 231 and connect the connecting member 235 and the end cover 231, so that the electrode terminal 234 is partially located in the concave portion 2312 on the abutting surface 2311.

In the above method, the sequence of step S100 and step S200 is not limited. Step S100 may be performed before step S200, or step S200 may be performed before step S100.

It should be noted that for related structures of the end cover assembly 23 manufactured using the manufacturing method provided in the foregoing embodiments, reference may be made to the end cover assembly 23 manufactured using the manufacturing method provided in the foregoing embodiments. Details are not repeated herein.

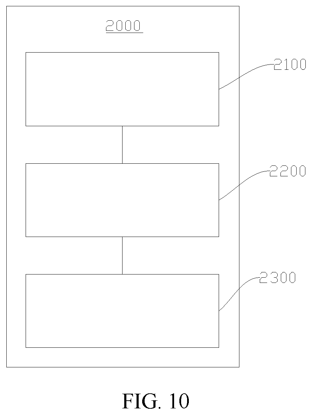

An embodiment of this application further provides a manufacturing device 2000 for end cover assembly 23. Refer to FIG. 10. FIG. 10 is schematic block diagram of a manufacturing device 2000 for end cover assembly 23 according to some embodiments of this application. The manufacturing device 2000 includes a first providing apparatus 2100, a second providing apparatus 2200, and an assembling apparatus 2300.

The first providing apparatus 2100 is configured to provide an end cover 231, where the end cover 231 has an abutting surface 2311, and the abutting surface 2311 is provided with a concave portion 2312 recessed in a thickness direction Z of the end cover 231. The second providing apparatus 2200 is configured to provide a terminal assembly, where the terminal assembly includes an electrode terminal 234 and a connecting member 235, and the connecting member 235 is connected to the electrode terminal 234. The assembling apparatus 2300 is configured to make the connecting member 235 abut against the abutting surface 2311. The assembling apparatus 2300 is further configured to connect the connecting member 235 and the end cover 231, so that the electrode terminal 234 is partially located in the concave portion 2312.

It should be noted that for related structures of the end cover assembly 23 manufactured using the manufacturing device 2000 provided in the foregoing embodiments, reference may be made to the end cover assembly 23 provided in the foregoing embodiments. Details are not repeated herein.

It should be noted that, without conflict, the embodiments and features in the embodiments in this application may be combined with each other.
Further embodiments of the present invention are provided in the following. It should be noted that the numbering used in the following section does not necessarily need to comply with the numbering used in the previous sections.
Embodiment 1. An end cover assembly, comprising:
   an end cover having an abutting surface; and
   a terminal assembly, comprising an electrode terminal and a connecting member, wherein the connecting member is configured to connect the electrode terminal and the end cover so as to fix the electrode terminal to the end cover, and the connecting member abuts against the abutting surface;
   wherein, the abutting surface is provided with a concave portion recessed in a thickness direction of the end cover, and the concave portion is configured to accommodate a part of the electrode terminal.
Embodiment 2. The end cover assembly according to embodiment 1, wherein in the thickness direction, the electrode terminal has a first end and a second end opposite to each other, the first end being located in the concave portion, and the second end being farther away from a bottom surface of the concave portion than an outer surface of the end cover.
Embodiment 3. The end cover assembly according to embodiment 2, wherein in the thickness direction, the outer surface of the end cover is farther away from the bottom surface of the concave portion than the abutting surface.
Embodiment 4. The end cover assembly according to any one of embodiments 1 to 3, wherein the end cover comprises:
   a body portion having the abutting surface, wherein in the thickness direction, the abutting surface and an inner surface of the body portion face away from each other; and
   a convex portion disposed at a position of the body portion corresponding to the concave portion and extending out from the inner surface of the body portion in a direction leaving the abutting surface.
Embodiment 5. The end cover assembly according to embodiment 4, wherein a bottom surface of the concave portion is farther away from the abutting surface than the inner surface of the body portion.
Embodiment 6. The end cover assembly according to any one of embodiments 1 to 5, wherein the end cover comprises a solid portion located at the bottom of the concave portion in the thickness direction, the solid portion being provided with a terminal lead-out hole communicating with the concave portion; and
   in the thickness direction, the electrode terminal is disposed opposite the terminal lead-out hole, and the electrode terminal and the solid portion are spaced apart.
Embodiment 7. The end cover assembly according to embodiment 6, wherein the end cover assembly further comprises:
   a sealing member, in the thickness direction, the sealing member being at least partially located between the electrode terminal and the solid portion so as to implement hermetic connection between the electrode terminal and the end cover.
Embodiment 8. The end cover assembly according to embodiment 7, wherein the sealing member comprises:
   a sealing portion, in the thickness direction, the sealing portion being at least partially located between the electrode terminal and the solid portion; and
   an extension portion connected to the sealing portion, the extension portion being at least partially located in the terminal lead-out hole, and the extension portion extending along a circumferential direction of the terminal lead-out hole.
Embodiment 9. The end cover assembly according to any one of embodiments 6 to 8, wherein in the thickness direction, the terminal lead-out hole is totally covered by the electrode terminal.
Embodiment 10. The end cover assembly according to any one of embodiments 1 to 9, wherein the terminal assembly further comprises:
   an insulating member connected to the electrode terminal and the connecting member, the insulating member being configured to insulate the electrode terminal from the connecting member, and the concave portion being configured to accommodate a part of the insulating member.
Embodiment 11. The end cover assembly according to embodiment 10, wherein the insulating member abuts against a bottom surface of the concave portion.
Embodiment 12. The end cover assembly according to embodiment 10 or 11, wherein the concave portion has an inner circumferential surface for guiding the insulating member to enter the concave portion, and in a direction from the abutting surface to the bottom surface of the concave portion, the inner circumferential surface has a radial size decreasing gradually.
Embodiment 13. The end cover assembly according to any one of embodiments 10 to 12, wherein the insulating member wraps an outer circumferential surface of the electrode terminal in a circumferential direction of the electrode terminal.
Embodiment 14. The end cover assembly according to any one of embodiments 10 to 13, wherein the connecting member comprises:
   a first connecting portion configured to abut against the abutting surface and connect to the end cover; and
   a second connecting portion located on an inner circumferential side of the first connecting portion, wherein in the thickness direction, the second connecting portion is farther away from the abutting surface than the first connecting portion, and the second connecting portion is configured to connect to the insulating member and prevent the electrode terminal from moving relative to the end cover along a direction leaving the end cover.
Embodiment 15. The end cover assembly according to embodiment 14, wherein the connecting member further comprises:
   a third connecting portion configured to connect the first connecting portion and the second connecting portion, the third connecting portion being provided with a through hole, and the insulating member being partially located in the through hole.
Embodiment 16. The end cover assembly according to any one of embodiments 1 to 15, wherein the connecting member comprises a first connecting portion configured to abut against the abutting surface and connect to the end cover; and
   an outer surface of the end cover is provided with an accommodating portion, wherein the accommodating portion is configured to accommodate at least a part of the first connecting portion, and the abutting surface is a bottom surface of the accommodating portion.
Embodiment 17. The end cover assembly according to embodiment 16, wherein in the thickness direction, the outer surface of the end cover is flush with an outer surface of the first connecting portion.
Embodiment 18. The end cover assembly according to embodiment 16 or 17, wherein the first connecting portion is welded to the end cover.
Embodiment 19. A battery cell, comprising:
   a housing having an opening;
   an electrode assembly configured to be accommodated in the housing; and
   the end cover assembly according to any one of embodiments 1 to 18, wherein the end cover is configured to cover the opening; and in a thickness direction of the end cover, the concave portion is recessed from the abutting surface in a direction approaching the electrode assembly.
Embodiment 20. A battery, comprising:
   the battery cell according to embodiment 19; and
   a box configured to accommodate the battery cell.
Embodiment 21. An electric device, comprising the battery according to embodiment 20.
Embodiment 22. A manufacturing method for end cover assembly, comprising:
   providing an end cover, wherein the end cover has an abutting surface, and the abutting surface is provided with a concave portion recessed in a thickness direction of the end cover;
   providing a terminal assembly, wherein the terminal assembly comprises an electrode terminal and a connecting member, the connecting member being connected to the electrode terminal; and
   making the connecting member abut against the abutting surface, and connecting the connecting member and the end cover so that the electrode terminal is partially located in the concave portion.
Embodiment 23. A manufacturing device for end cover assembly, comprising:
   a first providing apparatus configured to provide an end cover, wherein the end cover has an abutting surface, and the abutting surface is provided with a concave portion recessed in a thickness direction of the end cover;
   a second providing apparatus configured to provide a terminal assembly, wherein the terminal assembly comprises an electrode terminal and a connecting member, the connecting member being connected to the electrode terminal; and
   an assembling apparatus configured to make the connecting member abut against the abutting surface and connect the connecting member and the end cover so that the electrode terminal is partially located in the concave portion.

The foregoing embodiments are merely intended to describe the technical solutions in this application rather than to limit this application. Persons skilled in the art understands that this application may have various modifications and variations. Any modification, equivalent replacement, and improvement made without departing from the spirit and principle of this application shall fall within the protection scope of this application.

## Claims

1. An end cover assembly (23), comprising:
an end cover (231) having an abutting surface (2311); and
a terminal assembly, comprising an electrode terminal (234) and a connecting member (235), wherein the connecting member (235) is configured to connect the electrode terminal (234) and the end cover (231) so as to fix the electrode terminal (234) to the end cover (231), and the connecting member (235) abuts against the abutting surface (2311) in a thickness direction (Z) of the end cover (231);
wherein, the abutting surface (2311) is provided with a concave portion (2312) recessed in the thickness direction (Z) of the end cover (231), and the concave portion (2312) is configured to accommodate a part of the electrode terminal (234).

2. The end cover assembly (23) according to claim 1, wherein in the thickness direction (Z), the electrode terminal (234) has a first end (2341) and a second end (2342) opposite to each other, the first end (2341) being located in the concave portion (2312), and the second end (2342) being farther away from a bottom surface (2312a) of the concave portion (2312) than an outer surface (2313) of the end cover (231).

3. The end cover assembly (23) according to claim 2, wherein in the thickness direction (Z), the outer surface (2313) of the end cover (231) is farther away from the bottom surface (2312a) of the concave portion (2312) than the abutting surface (2311).

4. The end cover assembly (23) according to any one of claims 1 to 3, wherein the end cover (231) comprises:
a body portion (2314) having the abutting surface (2311), wherein in the thickness direction (Z), the abutting surface (2311) and an inner surface (2314a) of the body portion (2314) face away from each other; and
a convex portion (2315) disposed at a position of the body portion (2314) corresponding to the concave portion (2312) and extending out from the inner surface (2314a) of the body portion (2314) in a direction leaving the abutting surface (2311).

5. The end cover assembly (23) according to claim 4, wherein a bottom surface (2312a) of the concave portion (2312) is farther away from the abutting surface (2311) than the inner surface (2314a) of the body portion (2314).

6. The end cover assembly (23) according to any one of claims 1 to 5, wherein the end cover (231) comprises a solid portion (2316) located at the bottom of the concave portion (2312) in the thickness direction (Z), the solid portion (2316) being provided with a terminal lead-out hole (2317) communicating with the concave portion (2312); and
in the thickness direction (Z), the electrode terminal (234) is disposed opposite the terminal lead-out hole (2317), and the electrode terminal (234) and the solid portion (2316) are spaced apart.

7. The end cover assembly (23) according to claim 6, wherein the end cover assembly (23) further comprises:
a sealing member (236), in the thickness direction (Z), the sealing member (236) being at least partially located between the electrode terminal (234) and the solid portion (2316) so as to implement hermetic connection between the electrode terminal (234) and the end cover (231).

8. The end cover assembly (23) according to claim 7, wherein the sealing member (236) comprises:
a sealing portion (2361), in the thickness direction (Z), the sealing portion (2361) being at least partially located between the electrode terminal (234) and the solid portion (2316); and
an extension portion (2362) connected to the sealing portion (2361), the extension portion (2362) being at least partially located in the terminal lead-out hole (2317), and the extension portion (2362) extending along a circumferential direction of the terminal lead-out hole (2317).

9. The end cover assembly (23) according to any one of claims 6 to 8, wherein in the thickness direction (Z), the terminal lead-out hole (2317) is totally covered by the electrode terminal (234).

10. The end cover assembly (23) according to any one of claims 1 to 9, wherein the terminal assembly further comprises:
an insulating member (237) connected to the electrode terminal (234) and the connecting member (235), the insulating member (237) being configured to insulate the electrode terminal (234) from the connecting member (235), and the concave portion (2312) being configured to accommodate a part of the insulating member (237).

11. The end cover assembly (23) according to claim 10, wherein the insulating member (237) abuts against a bottom surface (2312a) of the concave portion (2312);
and/or
wherein the concave portion (2312) has an inner circumferential surface (2312b) for guiding the insulating member to enter the concave portion (2312), and in a direction from the abutting surface (2311) to the bottom surface (2312a) of the concave portion (2312), the inner circumferential surface (2312b) has a radial size decreasing gradually;
and/or
wherein the insulating member (237) wraps an outer circumferential surface of the electrode terminal (234) in a circumferential direction of the electrode terminal (234).

12. The end cover assembly (23) according to any one of claims 10 to 11, wherein the connecting member (235) comprises:
a first connecting portion (2351) configured to abut against the abutting surface (2311) and connect to the end cover (231); and
a second connecting portion (2352) located on an inner circumferential side of the first connecting portion (2351), wherein in the thickness direction (Z), the second connecting portion (2352) is farther away from the abutting surface (2311) than the first connecting portion (2351), and the second connecting portion (2352) is configured to connect to the insulating member (237) and prevent the electrode terminal (234) from moving relative to the end cover (231) along a direction leaving the end cover (231).

13. The end cover assembly (23) according to claim 12, wherein the connecting member (235) further comprises:
a third connecting portion (2353) configured to connect the first connecting portion (2351) and the second connecting portion (2352), the third connecting portion (2353) being provided with a through hole (2354), and the insulating member (237) being partially located in the through hole (2354).

14. The end cover assembly (23) according to any one of claims 1 to 13, wherein the connecting member (235) comprises a first connecting portion (2351) configured to abut against the abutting surface (2311) and connect to the end cover (231); and
an outer surface (2313) of the end cover (231) is provided with an accommodating portion (2318), wherein the accommodating portion (2318) is configured to accommodate at least a part of the first connecting portion (2351), and the abutting surface (2311) is a bottom surface (2312a) of the accommodating portion (2318);
preferably, wherein in the thickness direction (Z), the outer surface (2313) of the end cover (231) is flush with an outer surface (2313) of the first connecting portion (2351);
and/or
wherein the first connecting portion (2351) is welded to the end cover (231).

15. A battery cell (20), comprising:
a housing (21) having an opening;
an electrode assembly (22) configured to be accommodated in the housing (21); and
the end cover assembly (23) according to any one of claims 1 to 14, wherein the end cover (231) is configured to cover the opening; and in a thickness direction (Z) of the end cover (231), the concave portion (2312) is recessed from the abutting surface (2311) in a direction approaching the electrode assembly (22).
